# EUROPEAN PATENT APPLICATION

(11) **EP 4 734 615 A1**
(43) Date of publication of application: **29.04.2026**
(21) Application number: 25208852.1
(22) Date of filing: 15.10.2025
(51) Int. Cl.: H04W 48/18, H04W 88/06, H04W 8/08, H04W 92/02

(54) **LAND MOBILE RADIO DEVICE COMMUNICATING BASED UPON A LOCATOR ID SEPARATION PROTOCOL AND RELATED METHODS**

(30) Priority: 27.10.2024 US 202418928121
(71) Applicant: L3Harris Global Communications, Inc., Albany, NY 12207 (US)
(72) Inventor: NOVI, Matthew, Lynchburg, 24543 (US)
(74) Representative: Schmidt, Steffen J.

(57) **Abstract**

A land mobile radio (LMR) device may include wireless communications circuitry selectively operable over an LMR wireless communications network and a broadband (BB) wireless communications network. The LMR device may include a controller cooperating with the wireless communications circuitry to wirelessly communicate via one of the LMR wireless communications network and the BB wireless communications network based upon a Locator ID Separation Protocol (LISP).

## Description

### Technical Field

The present invention relates to the field of wireless communications, and, more particularly, to land mobile radio (LMR) wireless communications and related methods.

### Background

A land mobile radio (LMR) network permits person-to-person (P2P) communication. P2P voice communication may be performed using two-way radio transceivers which can be stationary, mobile, or portable.

A broadband network broadband is a relatively high speed, wide-bandwidth data transmission network. A broadband network often operates using multiple frequencies and for accessing the Internet.

A converged radio device may wirelessly communicate over more than one network, for example, an LMR network and a broadband network each having associated coverage area. In a converged radio, internet protocol (IP) services may be accessed either through the LMR or the broadband networks. As the converged radio device moves between different coverage area, it may be desirable to provide the appropriate IP services in the corresponding coverage area.

### Summary

A land mobile radio (LMR) may include wireless communications circuitry selectively operable over an LMR wireless communications network and a broadband (BB) wireless communications network. The LMR device may also include a controller cooperating with the wireless communications circuitry to wirelessly communicate via one of the LMR wireless communications network and the BB wireless communications network based upon a Locator ID Separation Protocol (LISP).

The LISP may use Endpoint Identifiers (EIDs) and Routing Locators (RLOCs) based on a Mapping Database. The controller may be configured to determine a respective communication cost associated with each of the LMR and BB wireless communications networks.

The controller may be configured to selectively switch wireless communications between the LMR and BB wireless communications networks based upon the respective communication costs, for example. The respective communications costs may be based upon respective bandwidth availabilities associated with the LMR and BB wireless communications networks, for example. The respective communications costs may be based upon respective signal-to-noise ratios associated with the LMR and BB wireless communications networks.

The controller may be configured to operate a plurality of applications. The controller may be configured to selectively switch wireless communications between the LMR and BB wireless communications networks based upon a given one of the plurality of applications, for example.

The wireless communications circuitry may include one of WiFi communications circuitry and cellular communications circuitry operable over the BB wireless communications network. The wireless communications circuitry may include LMR circuitry operable over the LMR wireless communications network, for example.

A system aspect is directed to a communications system that may include a land mobile radio (LMR) wireless communications network, a broadband (BB) wireless communications network, and a land mobile radio (LMR) device. The LMR device may include wireless communications circuitry selectively operable over the LMR wireless communications network and the BB wireless communications network. The LMR device may also include a controller cooperating with the wireless communications circuitry to wirelessly communicate via one of the LMR wireless communications network and the BB wireless communications network based upon a Locator ID Separation Protocol (LISP).

The LISP may use Endpoint Identifiers (EIDs) and Routing Locators (RLOCs) based on a Mapping Database, for example. The controller may be configured to determine a respective communication cost associated with each of the LMR and BB wireless communications networks.

The controller may be configured to selectively switch wireless communications between the LMR and BB wireless communications networks based upon the respective communication costs. The respective communications costs may be based upon at least one of respective bandwidth availabilities associated with the LMR and BB wireless communications networks and respective signal-to-noise ratios associated with the LMR and BB wireless communications networks.

A method aspect is directed to a method of communicating using a land mobile radio (LMR). The method may include operating a controller to cooperate with wireless communications circuitry selectively operable over an LMR wireless communications network and a broadband (BB) wireless communications network to wirelessly communicate via one of the LMR wireless communications network and the BB wireless communications network based upon a Locator ID Separation Protocol (LISP).

### Brief Description of the Drawings

FIG. 1 is a schematic diagram of a communications system according to an embodiment.
FIG. 2 is a schematic block diagram of the communications system of FIG. 1.
FIG. 3 is a schematic operational diagram of the communications system of FIG. 1.
FIG. 4 is a more detailed schematic operational diagram of the communications system of FIG. 1.

### Detailed Description

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

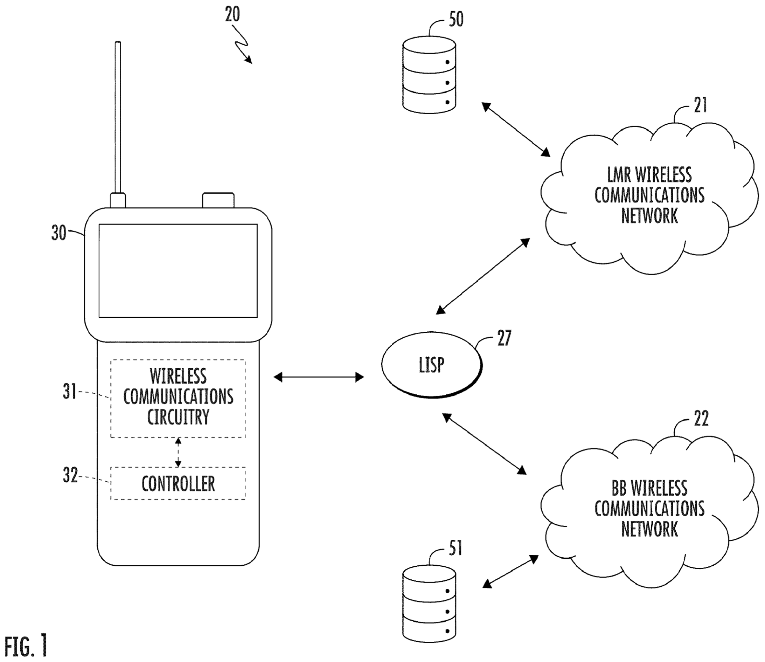

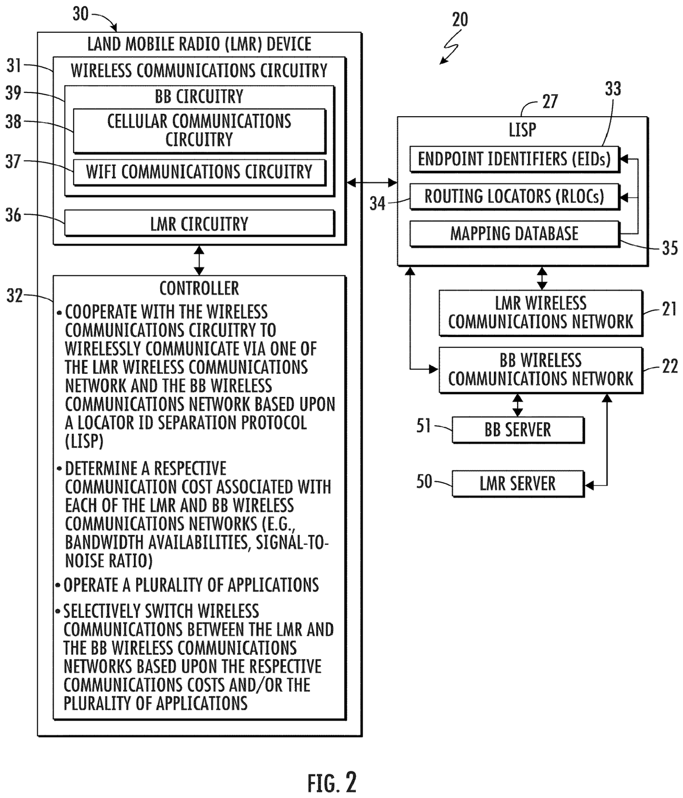

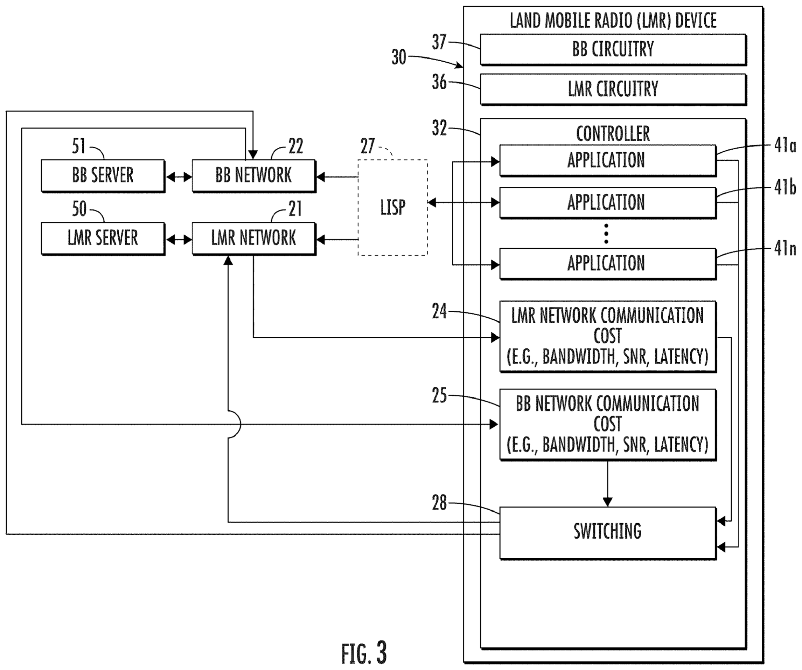

Referring initially to FIGS. 1-3, a communications system **20** includes a land mobile radio (LMR) wireless communications network **21.** The communications system **20** also includes a broadband (BB) wireless communications network **22.** The BB wireless communications network **22** may include a WiFi or Ethernet wireless communications network and/or cellular wireless communications network, for example.

The communications system **20** also includes an LMR device **30.** The LMR device **30** includes wireless communications circuitry **31** that is selectively operable over the LMR wireless communications network **21** and the BB wireless communications network **22.** The wireless communications circuitry **31** includes LMR circuitry **36** operatable over the LMR wireless communications network **21.** The wireless communications circuitry **31** also includes BB circuity **39** that may include either or both of WiFi communications circuity **37** and cellular communications circuitry **38** (e.g., long-term evolution (LTE)) operable over the BB wireless communications network **22.** Accordingly, the LMR device **30** may be considered a converged radio device in that it can communicate via the LMR wireless communications network **21** and the BB wireless communications network **22.**

As will be appreciated by those skilled in the art, communications over the LMR wireless communications network **21** are relatively slow, for example, 1200 baud, and the LMR wireless communications network may have a relatively low bandwidth. In contrast, communications over the BB wireless communications network **22** may be relatively fast and the BB wireless communications network may have a relatively large bandwidth.

The LMR device **30** also includes a controller **32** coupled to the wireless communications circuitry **31.** The controller **32** may execute applications **41a-41n,** for example, LMR communications applications, such as, mobile data terminal or network bridge applications, cryptographic key management applications, and/or location update applications. The LMR device **30** may communicate over the LMR and BB wireless communications networks **21, 22** to respective LMR and BB servers **50, 51,** for example, to perform data services or functions associated with the applications **41a-41n.** Some applications **41a-41n** may be operable via the LMR wireless communications network **21,** while others may be operable via the BB wireless communications network **22** or both the LMR and BB wireless communications networks.

The controller **32** cooperates with the wireless communications circuitry **31** to wirelessly communicate via one of the LMR wireless communications network **21** and the BB wireless communications network **22** based upon a Locator ID Separation Protocol (LISP) **27.** As will be appreciated by those skilled in the art, the LISP **27** uses Endpoint Identifiers (EIDs) **33** and Routing Locators (RLOCs) **34** based upon a mapping database **35.** EIDs **33** are IPv4 or IPv6 addresses that uniquely identify communication end hosts. EIDs **33** do not include inter-domain topological information. The RLOCs **34** are addresses assigned topologically to network attachment points and are typically routed inter-domain, as will be appreciated by those skilled in the art. Within the LISP **27,** the EIDs **33** and the RLOCs **34** provide an architecture to build overlays on top of the underlying Internet. Mapping EIDs **33** to sets of RLOCs **34** is accomplished with the mapping database **35.** By using a level of indirection for routing and addressing, separating an address identifier from its location permits scalability and mobility. By assigning EIDs **33** to mobile devices (e.g., the LMR device **30)** and RLOCs **34** to the network nodes (e.g., nodes within the BB wireless communications network **22**), LISP **27** can provide relatively seamless mobility.

As the LMR device **30** moves between different coverage areas of the LMR and BB wireless communications networks **21, 22,** it may be desirable to provide the appropriate data services (e.g., LMR or BB) in each area. Moreover, it may be desirable for transitions between coverage areas (e.g., LMR and BB) to be transparent to the LMR and BB servers **50, 51** and that those servers need not relearn the converged client IP as it roams, as will be appreciated by those skilled in the art.

A cryptographic key management application, for example, may permit changing or rotating of cryptographic keys. The LMR server **50** may send, for example, an IP message to the LMR device **30** via the LMR wireless communications network **21** to change one of the cryptographic keys. The LMR server **50** may store a database of IP addresses each associated with an LMR device **30.** If, for example, wireless communications are changed from the LMR wireless communications network **21** to the BB wireless communications network **22** (e.g., LTE) the database may be unavailable to BB server **51.** Those skilled in the art will appreciate that LISP **27** addresses this shortcoming, for example, by permitting the LMR device **30** to roam with relatively transparent transitions between the networks or coverage areas. In this way, the LMR and BB servers **50, 51** may not have to relearn IP addresses and/or infrastructure as it roams.

The controller **32** advantageously permits switching **28** of wireless communications between the LMR and BB wireless communications networks, **21, 22.** The controller **32** may selectively switch **28** between or wirelessly communicate with either of the LMR and BB wireless communications networks **21, 22,** based upon a respective communication cost **24, 25** associated with the LMR and BB wireless communications networks. Accordingly, the controller **32** determines respective communication costs **24, 25** associated with each of the LMR and BB wireless communications networks **21, 22** and selectively switches **28** wireless communications between the LMR and BB wireless communications networks based upon the respective communication costs **24, 25.**

The controller **32** may determine the respective communication costs **24, 25** based upon respective bandwidth availabilities with the LMR and BB wireless communications networks **21, 22.** The controller **32** may alternatively or additionally determine the respective communication costs **24, 25** based upon respective signal-to-noise ratios and/or latency associated with the LMR and BB wireless communications networks **21, 22.**

The controller **32** may also switch **28** wireless communication between the LMR and BB wireless communications networks **21, 22** based upon a given one (e.g., currently used) of the applications **41a-41n.** More particularly, the controller **32** may selectively switch **28** to one of the LMR and BB wireless communications networks **21, 22** based upon the application being executed. For example, the given application may give preference to one of the LMR and BB wireless communications networks **21, 22** or operate based upon a single network (e.g., network compatibility). Accordingly, the controller **32** may switch **28** between the LMR and BB wireless communications networks **21, 22** when the cost exceeds a cost threshold and/or as desired for the given application **41a-41n,** with it being desirable to offload from the LMR wireless communications network whenever possible or practical. This way, as the LMR device **30** moves between different network coverage areas, for example, handoff may be relatively transparent to both the LMR device **30** and the LMR and BB servers **50, 51** while providing corresponding communications.

In some embodiments, the controller **32** may switch among multiple networks of the same type (e.g., BB) also based upon the respective communications costs **24, 25.** Of course, other and/or additional factors may serve as a basis for determining the respective communication costs **24, 25** associated with each of the LMR and BB wireless communications networks **21, 22.**

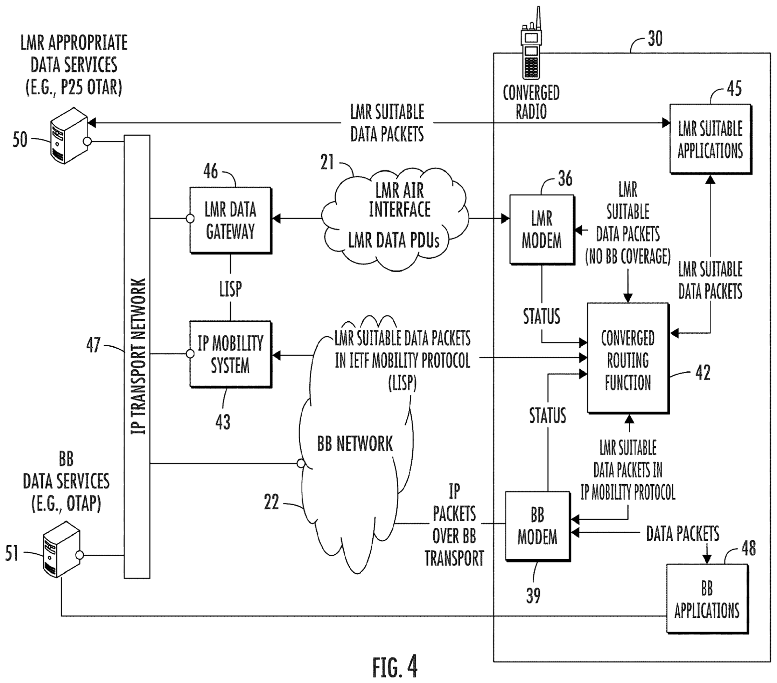

Referring now to FIG. 4, further details of a converged routing function in a converged radio, i.e., the LMR device **30** will now be described. The LMR device **30** receives status from one or more LMR modems defined by the LMR circuitry **36** and one or more BB modems defined by the BB circuitry **39.** BB applications **48** communicate with the BB modem **39.**

When the LMR device **30** is not in a BB communications coverage area, the LMR device, operates a converged routing function **42** to send LMR packets via LMR protocols over the LMR wireless communications network **21,** for example, a best available LMR wireless communications network. When the LMR device **30** is in a BB communications coverage area, the LMR device, via the converged routing function **42** selects the BB wireless communications network **22,** for example, a best available BB wireless communications network to convey LMR suitable data packets. The LMR device **30,** via the converged routing function **42,** establishes a relationship with an IP data mobility system **43** using an IP data mobility protocol - LISP.

Subsequently, the LMR device **30** receives packets destined for LMR suitable ones **45** of the applications **41a-41n** using the IP data mobility protocol (i.e., LISP). Packets destined for the LMR suitable data services are transmitted via the IP data mobility protocol (i.e., LISP). An LMR data gateway **46** assists in routing data among the LMR wireless communications network **21,** the IP mobility system **43,** and an IP transport network **47.** The LMR and BB servers **50, 51** provide LMR data services and BB data services respectively.

A method aspect is directed to a method of communicating using a land mobile radio (LMR) device **30.** The method includes operating a controller **32** to cooperate with wireless communications circuitry **31** selectively operable over an LMR wireless communications network **21** and a broadband (BB) wireless communications network **22** to wirelessly communicate via one of the LMR wireless communications network and the BB wireless communications network based upon a Locator ID Separation Protocol (LISP) **27.**

While several embodiments have been described herein, it should be appreciated by those skilled in the art that any element or elements from one or more embodiments may be used with any other element or elements from any other embodiment or embodiments. Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A land mobile radio (LMR) device comprising:
wireless communications circuitry selectively operable over an LMR wireless communications network and a broadband (BB) wireless communications network; and
a controller cooperating with the wireless communications circuitry to wirelessly communicate via one of the LMR wireless communications network and the BB wireless communications network based upon a Locator ID Separation Protocol (LISP).

2. The LMR device of Claim 1 wherein the LISP uses Endpoint Identifiers (EIDs) and Routing Locators (RLOCs) based on a Mapping Database.

3. The LMR device of Claim 1 wherein the controller is configured to determine a respective communication cost associated with each of the LMR and BB wireless communications networks.

4. The LMR device of Claim 3 wherein the controller is configured to selectively switch wireless communications between the LMR and BB wireless communications networks based upon the respective communication costs; and/or
wherein the respective communications costs are based upon respective bandwidth availabilities associated with the LMR and BB wireless communications networks; and/or
wherein the respective communications costs are based upon respective signal-to-noise ratios associated with the LMR and BB wireless communications networks.

5. The LMR device of Claim 1 wherein the controller is configured to operate a plurality of applications and selectively switch wireless communications between the LMR and BB wireless communications networks based upon a given one of the plurality of applications; and/or
wherein the wireless communications circuitry comprises one of WiFi communications circuitry and cellular communications circuitry operable over the BB wireless communications network; and/or
wherein the wireless communications circuitry comprises LMR circuitry operable over the LMR wireless communications network.

6. A communications system comprising:
a land mobile radio (LMR) wireless communications network;
a broadband (BB) wireless communications network; and
a land mobile radio (LMR) device comprising
wireless communications circuitry selectively operable over the LMR wireless communications network and the BB wireless communications network, and
a controller cooperating with the wireless communications circuitry to wirelessly communicate via one of the LMR wireless communications network and the BB wireless communications network based upon a Locator ID Separation Protocol (LISP).

7. The communications system of Claim 6 wherein the LISP uses Endpoint Identifiers (EIDs) and Routing Locators (RLOCs) based on a Mapping Database; and/or
wherein the controller is configured to determine a respective communication cost associated with each of the LMR and BB wireless communications networks.

8. The communications system of Claim 7 wherein the controller is configured to selectively switch wireless communications between the LMR and BB wireless communications networks based upon the respective communication costs; and/or
wherein the respective communications costs are based upon at least one of respective bandwidth availabilities associated with the LMR and BB wireless communications networks and respective signal-to-noise ratios associated with the LMR and BB wireless communications networks.

9. The communications system of Claim 6 wherein the wireless communications circuitry comprises one of WiFi communications circuitry and cellular communications circuitry operable over the BB wireless communications network.

10. The communications system of Claim 6 wherein the wireless communications circuitry comprises LMR circuitry operable over the LMR wireless communications network.

11. A method of communicating using a land mobile
radio (LMR) device, the method comprising:
operating a controller to cooperate with wireless communications circuitry selectively operable over an LMR wireless communications network and a broadband (BB) wireless communications network to wirelessly communicate via one of the LMR wireless communications network and the BB wireless communications network based upon a Locator ID Separation Protocol (LISP).

12. The method of Claim 11 wherein the LISP uses Endpoint Identifiers (EIDs) and Routing Locators (RLOCs) based on a Mapping Database; and/or
wherein operating the controller comprises operating the controller to determine a respective communication cost associated with each of the LMR and BB wireless communications networks.

13. The method of Claim 12 wherein operating the controller comprises operating the controller to selectively switch wireless communications between the LMR and BB wireless communications networks based upon the respective communication costs.

14. The method of Claim 12 wherein the respective communications costs are based upon at least one of a respective bandwidth availabilities associated with the LMR and BB wireless communications networks and respective signal-to-noise ratios associated with the LMR and BB wireless communications networks.

15. The method of Claim 11 wherein operating the controller comprises operating the controller to selectively switch wireless communications between the LMR and BB wireless communications networks based upon a given one of a plurality of applications operated by the controller.
